(19) Europäisches Patentamt
European Patent Office
Office européen des brevets

(11) **EP 4 718 284 A1**

(12) **EUROPEAN PATENT APPLICATION**

(43) Date of publication:
**01.04.2026  Bulletin 2026/14**

(21) Application number: **24202639.1**

(22) Date of filing: **25.09.2024**

(51) International Patent Classification (IPC):
**G06F 16/906** (2019.01)    **G06N 3/00** (2023.01)
**G06N 20/00** (2019.01)

(52) Cooperative Patent Classification (CPC):
**G06F 16/906; G06N 3/00; G06N 3/045; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Khoreva, Anna
70197 Stuttgart (DE)**
• **Bini, Massimo
72072 Tübingen (DE)**

Remarks:
Amended claims in accordance with Rule 137(2)
EPC.

(54) **DEVICE, DATA STRUCTURE, AND COMPUTER IMPLEMENTED METHOD FOR CONFIGURING A MODEL**

(57)    Device, data structure and method for configuring a model, wherein the method comprises providing (202) the model configured for determining an output of the model depending on an output of a layer of the model, wherein the layer is configured to map a multidimensional input of the layer depending on trained weights to a multidimensional output of the layer, wherein the method comprises iteratively arranging (206) the trained weights in vectors of a first matrix, determining (206) a second matrix by removing at least one vector from the first matrix, determining (206) an input of reduced dimensions by removing from the multidimensional input the dimension that corresponds or the dimensions that correspond to the at least one vector, configuring (206) the model (106) with a layer of reduced dimensions that is configured to map the input of reduced dimensions depending on weights from the second matrix to an output of reduced dimensions, and configuring (206) the model for determining the output of the model depending on the output of reduced dimensions, providing (204) training data, training (208) the weights of the layer of reduced dimensions on the training data, and providing (206) the trained weights of the layer of reduced dimensions for the first matrix.

Fig. 2

EP 4 718 284 A1

## Description

Background

The invention relates to a device, a data structure, and a computer implemented method for configuring a model.

In deep learning, a model may be pretrained. The pretrained model may then be configured for improving computational efficiency.

Disclosure of the invention

The device and the computer implemented method configure the model for improving computational efficiency, in particular for the task of outputting, depending on an input of the model, a classification, a digital image, audio data, or video data, or virtual sensor data.

The method for configuring the model comprises providing the model configured for determining an output of the model depending on an output of a layer of the model, wherein the layer is configured to map a multidimensional input of the layer depending on trained weights to a multidimensional output of the layer, wherein the method comprises iteratively arranging the trained weights in vectors of a first matrix, determining a second matrix by removing at least one vector from the first matrix, determining an input of reduced dimensions by removing from the multidimensional input the dimension that corresponds or the dimensions that correspond to the at least one vector, configuring the model with a layer of reduced dimensions that is configured to map the input of reduced dimensions depending on weights from the second matrix to an output of reduced dimensions, and configuring the model for determining the output of the model depending on the output of reduced dimensions, providing training data, training the weights of the layer of reduced dimensions on the training data, and providing the trained weights of the layer of reduced dimensions for the first matrix. Providing the trained weights of the layer of reduced dimensions for the first matrix means that the weights in the first matrix that correspond to the weights that are trained in the in the layer of reduced dimension are replaced with the corresponding trained weights of the layer of reduced dimensions.

Removing the at least one vector from the first matrix may comprise determining a single value decomposition of the first matrix that associates the vectors of the first matrix with one single value of the decomposition respectively, finding at least one single value that is less than a threshold or selecting at least one single value, and removing the vector that is associated with the at least one single value.

Removing the at least one vector from the first matrix may comprise determining the co-variance matrix of the multidimensional input depending on the multidimensional input, determining the eigenvalues of the co-variance matrix, determining the eigenvectors of the co-variance matrix that are associated with the eigenvalues, determining a transformation matrix that comprises the eigenvectors, in particular sorted by decreasing order of the eigenvalues that they are associated with, transforming the multidimensional input to a signal depending on a product of the multidimensional input and the transformation matrix, determining the input of reduced dimensions by removing dimensions from the signal to determine the input of reduced dimensions, in particular dimensions that correspond to eigenvalues that are less than a threshold or dimensions that comprise more sparse elements than other dimensions, in particular by removing bottom rows of the signal, and transforming the first matrix to a transformed matrix depending on a product of the transposed of the transformation matrix with the first matrix, and determining the second matrix by removing dimensions from the transformed matrix to determine the second matrix, in particular dimensions that correspond to the dimensions removed from the signal.

Removing the at least one vector from the first matrix may comprise providing a Housholder transformation matrix for determining a hyperplane reflection of the vectors comprising the trained weights into respective directions, determining a first output of the model for the multidimensional input with the layer comprising the first matrix, determining a second output of the model for the multidimensional input using instead of the layer a product of the Housholder transformation matrix with the respective vectors of the first matrix, learning the Housholder transformation matrix depending on the difference between the first output and the second output, determining a vector for that the direction of the hyperplane reflection is invariant in the training of the Housholder transformation, and removing the vector.

The model may comprise a plurality of layers, wherein configuring the model comprises determining the layer of reduced dimensions, for the respective layers of the plurality of layers depending on the training data.

The model may be configured to determine the input of the layer depending on an input of the model, wherein the training data comprises pairs of an input of the model and a ground truth for the output of the model, wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

The method may comprise receiving an input of the model that comprises or represents information about a technical system, determining an output of the configured model that the configured model outputs for the input of the model, and outputting the output of the configured model and/or operating the technical system depending on the output of the configured model.

The device for configuring a model comprises at least one processor and at least one memory, wherein the at least one memory comprises instructions that are executable by the at least one processor, and that, when executed by the at least one processor cause the device to execute the method for configuring the model.

A computer program may comprise instructions that are executable by a computer and that, when executed by the computer, cause the computer to execute the method for configuring the model.

A data structure, in particular a computer implemented data structure, for configuring a model, comprises at least one data field for the model configured for determining an output of the model depending on an output of a layer of the model, wherein the layer is configured to map a multidimensional input of the layer depending on trained weights to a multidimensional output of the layer, wherein the data structure comprises at least one data field for iteratively arranging the trained weights in vectors of a first matrix, wherein the data structure comprises at least one data field for a second matrix determined by removing at least one vector from the first matrix, wherein the data structure comprises at least one data field for an input of reduced dimensions determined by removing from the multidimensional input the dimension that corresponds or the dimensions that correspond to the at least one vector, wherein the data structure comprises at least one data field for the configured model, wherein the model is configured with a layer of reduced dimensions that is configured to map the input of reduced dimensions depending on weights from the second matrix to an output of reduced dimensions, and wherein the model is configured for determining the output of the model depending on the output of reduced dimensions, and wherein the data structure comprises at least one data field for training data.

Further embodiments are derived from the following description and the drawing. In the drawing,

> Fig. 1 schematically depicts a device for configuring a model,
> Fig. 2 schematically depicts a flow chart comprising steps of a method for configuring the model,
> Fig. 3 schematically depicts a data structure.

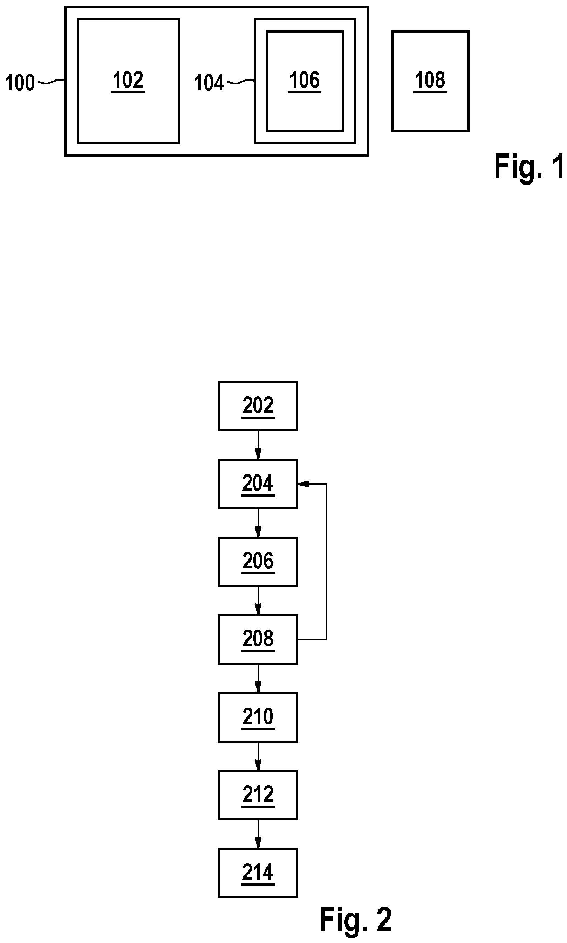

Figure 1 schematically depicts a device 100. The device 100 comprises at least one processor 102 and at least one memory 104. The at least one memory 104 stores instructions. The at least one processor 102 is configured to execute the instructions.

The device 100 is configured for executing a method for configuring a model 106. The instructions, when executed by the at least one processor, cause the device 100 to execute the method.

In the example, the at least one memory 104 stores the model 106.

The model 106 may be configured to receive input that comprises or represents information about a technical system 108. The model 106 may be configured to determine an output of the model 106 for operating the technical system 108 depending on the input of the model 106.

The technical system 108 may be a robot, in particular a vehicle. The technical system 108 may be a computer controlled machine, in particular a manufacturing machine, a power tool, a household appliance, or a personal assist system.

According to an example, the model 106 is a neural network that is configured to determine an output of the model 106 depending on an input of the model 106.

The neural network comprises at least on layer, that is configured to determine an output of the layer depending on an input of the layer.

According to an example, the neural network comprises a series of layers. The series of layers comprises an input layer, that is configured to receive the input of the model. The series of layers comprises an output layer that is configured to output the output of the model. The neural network comprises at least one layer l between the input layer and the output layer. A layer l that is arranged between the input layer and the output layer is configured to determine an output y of the layer depending on an input x of the layer, weights $W \in \mathbb{R}^{d \times f}$ and an optional bias $b \in \mathbb{R}^{f}$ :

$$y = W^T x + b$$

According to an example, the input x of a layer $l_i$ of a series of n layers $l_i$, $i = 1, ..., n$ that are arranged between the input layer and the output layer is determined with an activation function $\phi$ depending on the output $y_i$ of a layer $l_{i-1}$ preceding the layer $l_i$ $x = \phi(y)$ a plurality of layers.

The input of the first layer $l_0$ is the input of the model 106. The output of the last layer $l_n$ is the output of the model 106.

According to the example, the weights W are pretrained.

The model 106 may be an in particular large-scale deep learning model configured for various tasks.

The model 106 may be configured for outputting, depending on the input of the model 106, a classification, a digital image, audio data, or video data, or virtual sensor data. The input may comprise sensor data, e.g. a digital image, audio data, or video data, radar data, LiDAR data, ultrasonic sensor data, motion sensor data, or thermal image sensor data. The input may comprise time series data.

The model 106 may be configured for be used for classifying the sensor data, detecting the presence of objects in the sensor data or performing a semantic segmentation on the sensor data, e.g. regarding traffic signs, road surfaces, pedestrians, or vehicles. This may be carried out based on low-level features, e.g. edges or pixel attributes for images.

The model 106 may be configured for determining a continuous value or multiple continuous values, i.e., perform a regression analysis, e.g., regarding a distance, a velocity, an acceleration, or tracking an item, e.g., an object, in the data. This may be carried out based on low-level features, e.g. edges or pixel attributes for images.

Their large-scale model requires immense computational and memory requirements for deployment, particularly in resource-constrained environments such as mobile devices, IoT devices, and edge computing platforms.

In response to these challenges, model compression and distillation are effective strategies for mitigating the overheads associated with large-scale models.

Model compression techniques aim to reduce the size of deep learning models by pruning redundant parameters, quantizing weights, or employing low-rank factorization methods. While these techniques can significantly reduce the memory footprint of models, they may come with a trade-off in terms of performance.

Model distillation, on the other hand, offers a complementary approach to model compression by transferring knowledge from a large teacher model to a smaller student model. By distilling the knowledge encapsulated in the predictions of the teacher model, the student model can achieve comparable performance to its larger counterpart while requiring fewer parameters and less computational resources.

However, while model compression and distillation offer promising solutions to the challenges posed by large-scale models, model compression and distillation may lead to:

Loss of Information: During the compression and distillation process, there is a risk of losing valuable information encoded in the parameters of the teacher model. This loss can lead to a degradation in the performance of the student model, particularly in tasks that require nuanced understanding or precise predictions.

Task Specificity: The effectiveness of compression and distillation techniques may vary across different tasks and domains. Models that perform well on one task may not generalize as effectively to others, necessitating task-specific optimization and customization.

Computational Overhead: While model compression reduces the memory footprint of models, the compression process itself can be computationally intensive, particularly for large-scale models. Additionally, distillation requires training both the teacher and student models, adding overhead in terms of computational resources and time.

Figure 2 depicts a flow chart comprising steps of a method for configuring the model 106.

The method is based on geometric tools, e.g.,

Singular Value Decomposition (SVD) and Hyperplane Reflection, to compress pretrained large-scale models while effectively keeping prior-knowledge by removing from the model dimensions - named non-intrinsic dimensions (NID).

Configuring the model 106 is described by way of example of on layer of the model 106 that is defined by weights. The weights of the layer are arranged in the example in the matrix W.

SVD: Any real matrix W can be decomposed into its Singular Value Decomposition (SVD form):

$$W = \sum_{t=1}^{r} \sigma_i u_i v_i^T$$

where $\sigma_i$ is the $i$ - $th$ singular value (in decreasing order), and $u_i$ and $v_i$ are the left and right orthonormal singular vectors respectively. $r \leq min(m, n)$ is the rank of the matrix W. In this summation, the rank-1 matrices $u_i v_i^T$ making up the full matrix are ordered in terms of relevance, being scaled by singular values ordered in a decreasing order.

The method for example splits the matrix W in two parts, a high value part $W^h$ and a low value part $W^l$, by selecting a threshold determining an intermediate index, or arbitrarily selecting this intermediate index $s < r$, such that

$$W^h = \sum_{t=1}^{s} \sigma_i u_i v_i^T, \qquad W^l = \sum_{t=s+1}^{r} \sigma_i u_i v_i^T$$

The method for example utilizes an iterative decomposition procedure, combined with further finetuning, to actively compress information into the low-rank matrices. The method for a simple fully connected neural network layer that comprises weights defined by the matrix W for example comprises the following procedure:

- decomposing the pretrained matrix W into its SVD form (SVD summation),
- truncating the SVD summation by discarding the part $W^l$, following a criterion based on the threshold or the index. In this way, the method keeps most of the knowledge while removing noisy information,
- finetuning the new truncated model 106, e.g., the layer of the model 106 defined by the matrix $W^h$. The new truncated model 106 is for example finetuned in a Teacher-Student manner or on training data directly to output a desired output. The finetuning leads to a new distribution of weights with a new low-value and high-value parts. The method may comprise a regularization term pushing for more directionality towards a nonhomogeneous distribution.
- decomposing again the truncated network defined by the matrix $W^h$ into a high value part $W^{h,h}$ and a low value part $W^{h,l}$,

- truncating the truncated network by discharging the low value part $W^{h,l}$ of the truncated network following the same criterion or a more permissive threshold. This iteratively removes useless information.
- finetuning the new truncated network as described above,
- continue this procedure until a predefined stopping criterion is triggered.

The procedure is described for a simple fully connected layer. The method may comprise applying this procedure in particular simultaneously for decomposing multiple linear layers of the model 106, e.g., the multiple linear layers belonging to a larger network.

The stopping criterion may be loss-dependent or dependent on a per-layer statistic. The per-layer statistic leads to a more flexible procedure that may stop the procedure for individual layers once the stopping criterion for the respective layer is met.

The stopping criterion is for example met, when the best possible low-rank approximation is achieved or after a predetermined number of iterations of the decomposing.

Knowledge Distillation: A teacher-student network refers to a framework where knowledge is transferred from a large, complex model (the teacher) to a smaller, simpler model (the student). The teacher model serves as a guide by providing labeled data or soft target probabilities to train the student model, enabling it to mimic the behavior and predictions of the teacher model. This process, known as knowledge distillation, facilitates the creation of more efficient and lightweight models with comparable performance to their larger counterparts. On the other hand, it is defined as feature distillation if the imitation is not happening on the final predictions, but happens on the intermediate layers.

Compressing via SVD: M. B. Noach and Y. Goldberg, "Compressing pre-trained language models by matrix decomposition," in AACL, 2020. proposes a two-stage model compression method. It involves decomposing model's weight matrices via SVD into smaller low-rank versions and performing knowledge and feature distillation on the internal representation to recover from the truncation.

This method reduces the number of parameters while preserving much of the information within the model.

Compressing via PCA: S. Ashkboos, M. L. Croci, M. G. do Nascimento, T. Hoefler, and J. Hensman, "Slicegpt: Compress large language models by deleting rows and columns," 2024 (SliceGPT) discloses a post-training sparsification scheme that reduces the embedding dimension of the network by replacing weight matrices with smaller dense matrices. The method computes transformations at each layer using Principal Component Analysis (PCA), such that the signal between blocks is projected onto its principal components. According to SliceGPT, deleting the minor principal components corresponds to slicing away rows or columns of the modified network, being able to remove a significant percentage of model parameters while maintaining high zero-shot task performance.

The method may comprise a dimension reduction via iterative PCA. The use of orthogonal transformations to rotate pretrained weights into their principal component (PC)-decomposition in SliceGPT removes low-impact PCs while keeping valuable information. However, such reduction in order not to degrade performance is able to remove only a small portion of pretrained weights, not actively modifying the network's functionality to best fit in smaller dimensions.

The method may comprise iteratively compressing information in a smaller dimensional space, by iterating the application of the PCA approach in SliceGPT with a consecutive finetuning step that allows the model to adapt to the new subspace, until the stopping criterion described above is reached.

The method may comprise a dimension Reduction via Hyperplane Reflections.

An Intrinsic Dimension (ID) of the pretrained model 106 may be much lower than the actual model dimension space. This means that a lot of the dimensionality, after training, is redundant and could be removed.

The method may comprise finding these dimensions, by looking for directions of the hyperplane reflections with respect to which the model performance is not affected. These directions are denoted as invariant directions, as per the directions which have no impact on the functionality of the layer, i.e. being part of the Non-Intrinsic Dimension of the model 106. To find such directions the method applies hyperplane reflections over the pretrained weight matrix W, and check for directions which do not have any impact.

To obtain the hyperplane reflections, the method may use the Householder transformation matrix

$$ H \in R^{d \times d} $$

with

$$ H = I - 2uu^{\mathsf{T}} $$

where $u \in R^{d \times 1}$ is a unit vector, making $uu^{\mathsf{T}}$ the outer product of $u$ and its transposed. If applied to a weight vector $w \in R^{d \times 1}$, this transformation will subtract twice the component of the vector w along the direction of u:

$$ Hw = (I - 2uu^{\mathsf{T}})w = w - 2u(u^{\mathsf{T}}w) $$

in other terms, reflecting vector w with respect to hyperplane defined by the unit vector u.

The vector $u \in \mathbb{R}^d$ is a learnable hyperplane unit normal vector. This means, the vector $u$ has unit length, i.e., the square of the d elements $u_i$ of the vector $u$ sum up to one: $u_1^2 + u_2^2 + \cdots + u_d^2 = 1$.

The matrix H has a constant Frobenius distance with respect to the Identity matrix $I \in \mathbb{R}^{d \times d}$.

According to the example, the reflected weight r is a vector that has to retain length L.

The reflected weight r of the weight vector w is determined depending on the transformation:

$$Hw = (I - 2uu^T)w = w - 2u(u^Tw)$$

Based on the transformation $H$, the output y of the adapted layer depends on the forward pass $(HW)^Tx + b$.

The dimensionality reduction procedure per one layer defined by the matrix W then becomes finding an invariant direction, i.e. finding the hyperplane reflection direction u such that the output of the model 106 is not affected by it.

The method may comprise learning the Householder transformation based on a loss term that is comparing the output of the model 106 before and the output after the Householder transformation and optimizing for these two outputs to be equal.

The method may comprise learning the Householder transformation in a Teacher-Student network where the teacher is the original model 106 comprising the layer defined by matrix W, and the student is the model 106 modified with the Householder transformations applied to the matrix W.

Once a first direction is learned, the method may comprise re-basing, i.e. rotating, the weights, in a way that the invariant direction corresponds to a single term of the vector space, such that the invariant dimension can be removed.

The method may comprise applying the same procedure to find a second direction. The method may comprise applying the same procedure for fining further directions until the stopping criterion is reached or the performance of the model 106 starts dropping.

Notice that the procedure may transform each layer to have a different final dimension reduction. In addition, the method may comprise applying this procedure to both row and column vectors of the weight matrix W, potentially leading to further dimensionality reduction.

The procedures that are based on SVD and PCA make use of the measurable weight impact as quantified by the SV terms of the SVD or the PC of the PCA. The hyperplane reflection based procedure acts on the model 106, e.g., on the network, at a functional level.

The procedure that is based on SVD results in a smaller model 106, e.g., a smaller network, with knowledge compressed into low-rank matrices substituting full-rank ones. This results in a lower parameter count.

The procedures that are based on PCA and hyperplane reflection are actively rotating the weight space, reducing the weight dimensionality iteratively removing dimensions.

The method may comprise combining the SVD based procedure with the PCA based or with the hyperplane reflection based procedure to further compress the model 106 by

(i) once or iteratively running the compression according to the procedure based on the SVD. This identifies and truncates excessive low-rank dimensions, bringing the matrices to a minimal low-rank dimension, and

(ii) applying dimensionality reduction via the procedure based on hyperplane reflections or based on PCA. This reduction is for example applied on the larger side of the low-rank matrices, i.e. not varying the rank, but the other dimensions. This further squeezes the matrices, bringing them to a minimal or a further compressed version of the matrices.

The procedure based on the SVD removes quantifiable (in terms of SV) unnecessary parameters.

The procedure based on PCA or hyperplane reduction tackle the search for the excessive invariant directions which have no functional effect.

The method may comprise applying firstly the procedure based on SVD, and secondly procedure based on PCA or hyperplane reduction. This has the advantage that the search for the excessive invariant directions which have no functional effect are executed in a smaller and more compressed search space.

The method for configuring the model 106 comprises a step 202.

The step 202 comprises providing the model 106 configured for determining an output of the model 106 depending on an output of a layer of the model 106.

The model 106 comprises layers $l_i$. A layer $l_i$ is configured to map a multidimensional input $x_i$ of the layer $l_i$ depending on weights $W_i$ and an optional bias $b_i$ to a multidimensional output:

$$y_i = W_i^T x_i + b_i$$

The weights $W_i$ comprise vectors $w_{i,j}$ that comprise a respective subset of the weights $W_i$ that weighs the elements of the multidimensional input $x_i$ for a dimension j of the output $y_{i,j}$ of the layer $l_i$.

The layer $l_i$ is configured to map a multidimensional input of the layer depending on trained weights to a multidimensional output of the layer.

Configuring the model 106 is described by way of example of one layer $l$, and a matrix $W$ comprising the weights of the one layer $l$.

The method comprises a step 204.

The step 204 comprises providing training data.

The training data comprises pairs of an input of the model 106 and a ground truth for an output of the model 106. The input of the model 106 may comprise or represent the information about the technical system 108. The output of the model 106 may be the output for operating the technical system 108.

The input for example represents or comprises a sensor signal. The output of the model 106 and the ground truth for example represents or comprises a classification of the sensor signal.

The input for example represents or comprises text. The output of the model 106 and the ground truth for example represents or comprises a digital image and/or or an audio signal.

The input for example represents or comprises text and a semantic map. The output of the model 106 and the ground truth for example represents or comprises a digital image.

The input for example represents or comprises at least one operating quantity of a technical system. The output of the model and the ground truth for example represents or comprises a sensor signal.

The method for configuring the model 106 comprises a step 206.

The step 206 comprises configuring the model 204.

Configuring the model 106 comprises iteratively executing the following steps:

- arranging the trained weights in vectors of a first matrix,
- determining a second matrix by removing at least one vector from the first matrix,
- determining an input of reduced dimensions by removing from the multidimensional input the dimension that corresponds or the dimensions that correspond to the at least one vector,
- configuring the model 106 with a layer of reduced dimensions that is configured to map the input of reduced dimensions depending on weights from the second matrix to an output of reduced dimensions, and
- configuring the model 106 for determining the output of the model 106 depending on the output of reduced dimensions,

The model 106 may be configured based on SVD.

This means, removing the at least one vector from the first matrix comprises determining the SVD of the first matrix and removing at least one vector that is associated with a single value that meets the criterion. The SVD of the first matrix associates the vectors of the first matrix with one single value of the decomposition respectively. The criterion is for example, that the single value is less than the threshold. The criterion is for example, that the single value has an index in the SVD that is less than the threshold.

This means, finding at least one single value that is less than a threshold or selecting at least one single value, and removing the vector that is associated with the at least one single value.

The model 106 may be configured based on PCA.

This means, removing the at least one vector from the first matrix comprises the following steps:

- determining for the layer *l* the co-variance matrix $C_l$ of the multidimensional input X

$$C_l = \sum_i X_{l,i}^T X_{l,i}$$

wherein $X_i$ represents the multidimensional input of an iteration i,
- determining the eigenvalues of the co-variance matrix,
- determining the eigenvectors of the co-variance matrix that are associated with the eigenvalues,
- determining a transformation matrix $Q_l$ that comprises the eigenvectors. The transformation matrix $Q_l$ comprises the eigenvectors in particular sorted by decreasing order of the eigenvalues that they are associated with,
- transforming the multidimensional input X to a signal S depending on a product $XQ_l$ of the multidimensional input X and the transformation matrix $Q_l$,
- determining the input of reduced dimensions by removing dimensions from the signal S to determine the input of reduced dimensions. The removed dimensions are for example the dimensions that correspond to eigenvalues that are less than a threshold or the dimensions that comprise more sparse elements than other dimensions. For example the bottom rows of the signal S are removed,
- transforming the first matrix W to a transformed matrix $\hat{W}$ depending on a product $Q_l^T W$ the transposed $Q_l^T$ of the transformation matrix $Q_l$ with the first matrix W, and
- determining the second matrix W' by removing dimensions from the transformed matrix $\hat{W}$ to determine the second matrix W'. For example the dimensions that correspond to the dimensions removed from the signal S are removed.

The model 106 may be configured base on the hyperplane reflections.

This means removing the at least one vector from the first matrix W comprises the following steps:

- providing a Housholder transformation matrix H for determining a hyperplane reflection of the vectors comprising the trained weights into respective directions,
- determining a first output of the model 106 for the multidimensional input with the layer comprising the first matrix W,

- determining a second output of the model 106 for the multidimensional input using instead of the layer a product Hw of the Housholder transformation matrix *H* with the respective vectors w of the first matrix *W,*
- learning the Housholder transformation matrix H depending on the difference between the first output and the second output,
- determining a vector for that the direction of the hyperplane reflection is invariant in the training of the Housholder transformation, and removing the vector.

Learning the Housholder transformation may comprise learning the vector $u_i$ of the transformation $H_i$ for the layer $l_i$. This means that the transformation comprises a single vector $u_i$ and the learning comprises determining the output $y_i$ of the layer $l_i$ depending on a product of the transformation $H_i$ with the weights $W_i$ of the layer $l_i$ and a bias $b_i$ The vector $u_i$ has unit length, and the transformation $H_i$ comprises the outer product $u_i u_i^T$ of the vector $u_i$ with the transposed $u_i^T$ of the vector $u_i$

$$y_i = (H_i W_i)^T x + b_i$$

The method comprises a step 208.

The step 208 comprises training the weights of the layer of reduced dimensions on the training data.

Afterwards, the step 204 is repeated for the trained weights of the layer of reduced dimensions in the first matrix.

This means, the trained weights are provided for the first matrix.

The method may be executed for multiple layers of the model 106. The method may be executed in particular in at least partially overlapping time periods for a plurality of layers of the model 106.

This means, configuring the model 106 may comprise determining the layer of reduced dimensions, for the respective layers of the plurality of layers depending on the training data.

The method may comprise a step 210.

The step 210 comprises receiving an input of the model 106 that comprises or represents information about the technical system 108.

The method may comprise a step 212.

The step 212 comprises determining an output of the configured model 106 that the configured model 106 outputs for the input of the model 106.

The method may comprise a step 214.

The step 214 comprises outputting the output of the configured model 106 and/or operating the technical system 108 depending on the output of the configured model 106.

In the step 214, the technical system 108 is for example operated depending on the output of the configured model 106.

For example, the technical system 108 is the robot, in particular a vehicle. For example, the input is a digital image, e.g., comprising an object representing a traffic participant or infrastructure.

For example, the output is a classification of the object. The robot may be operated to move the robot on a trajectory that is determined depending on the classification of the object, e.g., to avoid the object or to drive over the object.

For example, the technical system 108 is the computer controlled machine. The computer controlled machine may be operated to produce a workpiece depending on the output of the model 106. The computer controlled machine may comprise a human machine interface or a machine to machine interface. The computer controlled machine may be operated receive the input via the interface and/or to output the output of the model 106 via the interface.

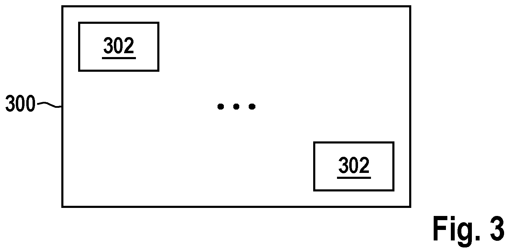

Figure 3 schematically depicts a data structure 300.

The data structure 300 may be a computer implemented data structure.

The data structure 300 comprises at least one data field 302 for

the model 106,
the first matrix,
the second matrix,
the input of reduced dimensions,
the configured model 106,
the training data.

**Claims**

1. A method for configuring a model (106), **characterized in that** the method comprises providing (202) the model (106) configured for determining an output of the model (106) depending on an output of a layer of the model (106), wherein the layer is configured to map a multidimensional input of the layer depending on trained weights to a multidimensional output of the layer, wherein the method comprises iteratively arranging (206) the trained weights in vectors of a first matrix, determining (206) a second matrix by removing at least one vector from the first matrix, determining (206) an input of reduced dimensions by removing from the multidimensional input the dimension that corresponds or the dimensions that correspond to the at least one vector, configuring (206) the model (106) with a layer of reduced dimensions that is configured to map the input of reduced dimensions depending on weights from the second matrix to an output of reduced dimensions, and configuring (206) the model (106) for determining the output of the model (106) depending on the output of reduced dimensions, providing (204) training data, training (208) the weights of the layer of reduced dimensions on the training data, and providing (206) the trained weights of the layer of reduced dimensions for the first matrix.

2. The method according to claim 1, **characterized in that** removing (206) the at least one vector from the first matrix comprises determining a single value decomposition of the first matrix that associates the vectors of the first matrix with one single value of the decomposition respectively, finding at least one single value that is less than a threshold or selecting at least one single value, and removing the vector that is associated with the at least one single value.

3. The method according to claim 1, **characterized in that** removing (206) the at least one vector from the first matrix comprises determining the co-variance matrix of the multidimensional input depending on the multidimensional input, determining the eigenvalues of the co-variance matrix, determining the eigenvectors of the co-variance matrix that are associated with the eigenvalues, determining a transformation matrix that comprises the eigenvectors, in particular sorted by decreasing order of the eigenvalues that they are associated with, transforming the multidimensional input to a signal depending on a product of the multidimensional input and the transformation matrix, determining the input of reduced dimensions by removing dimensions from the signal to determine the input of reduced dimensions, in particular dimensions that correspond to eigenvalues that are less than a threshold or dimensions that comprise more sparse elements than other dimensions, in particular by removing bottom rows of the signal, and transforming the first matrix to a transformed matrix depending on a product of the transposed of the transformation matrix with the first matrix, and determining the second matrix by removing dimensions from the transformed matrix to determine the second matrix, in particular dimensions that correspond to the dimensions removed from the signal.

4. The method according to claim 1, **characterized in that** removing (206) the at least one vector from the first matrix comprises providing a Housholder transformation matrix for determining a hyperplane reflection of the vectors comprising the trained weights into respective directions, determining a first output of the model (106) for the multidimensional input with the layer comprising the first matrix, determining a second output of the model (106) for the multidimensional input using instead of the layer a product of the Housholder transformation matrix with the respective vectors of the first matrix, learning the Housholder transformation matrix depending on the difference between the first output and the second output, determining a vector for that the direction of the hyperplane reflection is invariant in the training of the Housholder transformation, and removing the vector.

5. The method according to one of the preceding claims, **characterized in that** the model (106) comprises a plurality of layers, wherein configuring the model comprises determining the layer of reduced dimensions, for the respective layers of the plurality of layers depending on the training data.

6. The method according to one of the preceding claims, **characterized in that** the model (106) is configured to determine the input of the layer depending on an input of the model (106), wherein the training data comprises pairs of an input of the model (106) and a ground truth for the output of the model (106), wherein the input represents or comprises a sensor signal, and wherein the output and the ground truth represents or comprises a classification of the sensor signal, or wherein the input represents or comprises text, and the output and the ground truth represents or comprises a digital image and/or or an audio signal, or wherein the input represents or comprises text and a semantic map, and the output and the ground truth represents or comprises a digital image, or wherein the input represents or comprises at least one operating quantity of a technical system and the output and the ground truth represents or comprises a sensor signal.

7. The method according to one of the preceding claims, wherein the method comprises receiving (210) an input of the model (106) that comprises or represents information about a technical system (108), determining (212) an output of the configured model (106) that the configured model (106) outputs for the input of the model (106), and outputting (214) the output of the configured model (106) and/or operating (214) the technical system (108) depending on the output of the configured model (106).

8. A device (100) for configuring a model (106), **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

9. A computer program, **characterized in that** the computer program comprises instructions that are executable by a computer and that, when executed by the computer, cause the computer to execute the method according to one of the claims 1 to 7.

10. A data structure (300), in particular a computer implemented data structure, for configuring a model (106), **characterized in that** the data structure (300) comprises at least one data field (302) for the model (106) configured for determining an output of the model (106) depending on an output of a layer of the model (106), wherein the layer is configured to map a multidimensional input of the layer depending on trained weights to a multidimensional output of the layer, wherein the data structure (300) comprises at least one data field (302) for iteratively arranging (206) the trained weights in vectors of a first matrix, wherein the data structure (300) comprises at least one data field (302) for a second matrix determined by removing at least one vector from the first matrix, wherein the data structure (300) comprises at least one data field (302) for an input of reduced dimensions determined by removing from the multidimensional input the dimension that corresponds or the dimensions that correspond to the at least one vector, wherein the data structure (300) comprises at least one data field (302) for the configured model (106), wherein the model (106) is configured with a layer of reduced dimensions that is configured to map the input of reduced dimensions depending on weights from the second matrix to an output of reduced dimensions, and wherein the model (106) is configured for determining the output of the model (106) depending on the output of reduced dimensions, and wherein the data structure (300) comprises at least one data field (302) for training data.

**Amended claims in accordance with Rule 137(2) EPC.**

1. A method for classifying a sensor signal with a model (106), wherein the method comprises providing (202) the model (106) configured for determining an output of the model (106) depending on an output of a layer of the model (106), wherein the layer is configured to map a multidimensional input of the layer depending on trained weights to a multidimensional output of the layer, wherein the method comprises iteratively arranging (206) the trained weights in vectors of a first matrix, determining (206) a second matrix by removing at least one vector from the first matrix, **characterized in that** the method comprises determining (206) an input of reduced dimensions by removing from the multidimensional input the dimension that corresponds or the dimensions that correspond to the at least one vector, configuring (206) the model (106) with a layer of reduced dimensions that is configured to map the input of reduced dimensions depending on weights from the second matrix to an output of reduced dimensions, and configuring (206) the model (106) for determining the output of the model (106) depending on the output of reduced dimensions, providing (204) training data, training (208) the weights of the layer of reduced dimensions on the training data, and providing (206) the trained weights of the layer of reduced dimensions for the first matrix, wherein the model (106) is configured to determine the input of the layer depending on an input of the model (106), wherein the training data comprises pairs of an input of the model (106) and a ground truth for the output of the model (106), wherein the method comprises receiving (210) an input of the model (106) that comprises or represents information about a technical system (108), determining (212) an output of the configured model (106) that the configured model (106) outputs for the input of the model (106), and outputting (214) the output of the configured model (106), wherein the input represents or comprises the sensor signal, and wherein the output and the ground truth represents or comprises a classification of the sensor signal, wherein the model (106) is configured for outputting, depending on the input of the model (106), a classification classifying the sensor signal, wherein the sensor signal comprises a digital image, audio data, or video data, radar data, LiDAR data, ultrasonic sensor data, motion sensor data, or thermal image sensor data, wherein the technical system (108) is a robot, in particular a vehicle, wherein the input comprises an object representing a traffic participant or infrastructure, wherein the output is a classification of the object, wherein the classification of the object is to avoid the object or to drive over the object.

2. The method according to claim 1, **characterized in that** removing (206) the at least one vector from the first matrix comprises determining a single value decomposition of the first matrix that associates the vectors of the first matrix with one single value of the decomposition respectively, finding at least one single value that is less than a threshold or selecting at least one single value, and removing the vector that is associated with the at least one single value.

3. The method according to claim 1, **characterized in that** removing (206) the at least one vector from the first matrix comprises determining the co-variance matrix of the multidimensional input depending on the multidimensional input, determining the eigenvalues of the co-variance matrix, determining the eigenvectors of the co-variance matrix that are associated with the eigenvalues, determining a transformation matrix that comprises the eigenvectors, in particular sorted by decreasing order of the eigenvalues that they are associated with, transforming the multidimensional input to a signal depending on a product of the multidimensional input and the transformation matrix, determining the input of reduced dimensions by removing dimensions from the signal to determine the input of reduced dimensions, in particular dimensions that correspond to eigenvalues that are less than a threshold or dimensions that comprise more sparse elements than other dimensions, in particular by removing bottom rows of the signal, and transforming the first matrix to a transformed matrix depending on a product of the transposed of the transformation matrix with the first matrix, and determining the second matrix by removing dimensions from the transformed matrix to determine the second matrix, in particular dimensions that correspond to the dimensions removed from the signal.

4. The method according to claim 1, **characterized in that** removing (206) the at least one vector from the first matrix comprises providing a Housholder transformation matrix for determining a hyperplane reflection of the vectors comprising the trained weights into respective directions, determining a first output of the model (106) for the multidimensional input with the layer comprising the first matrix, determining a second output of the model (106) for the multidimensional input using instead of the layer a product of the Housholder transformation matrix with the respective vectors of the first matrix, learning the Housholder transformation matrix depending on the difference between the first output and the second output, determining a vector for that the direction of the hyperplane reflection is invariant in the training of the Housholder transformation, and removing the vector.

5. The method according to one of the preceding claims, **characterized in that** the model (106) comprises a plurality of layers, wherein configuring the model comprises determining the layer of reduced dimensions, for the respective layers of the plurality of layers depending on the training data.

6. A device (100) for classifying a sensor signal with a model (106), **characterized in that** the device (100) comprises at least one processor (102) and at least one memory (104), wherein the at least one memory (104) comprises instructions that are executable by the at least one processor (102), and that, when executed by the at least one processor (102) cause the device (100) to execute the method according to one of the preceding claims.

7. A computer program, **characterized in that** the computer program comprises instructions that are executable by a computer and that, when executed by the computer, cause the computer to execute the method according to one of the claims 1 to 5.

8. A data structure (300), in particular a computer implemented data structure, for classifying a sensor signal with a model (106), wherein the data structure (300) comprises at least one data field (302) for the model (106) configured for determining an output of the model (106) depending on an output of a layer of the model (106), wherein the layer is configured to map a multidimensional input of the layer depending on trained weights to a multidimensional output of the layer, wherein the data structure (300) comprises at least one data field (302) for iteratively arranging (206) the trained weights in vectors of a first matrix, wherein the data structure (300) comprises at least one data field (302) for a second matrix determined by removing at least one vector from the first matrix, **characterized in that** the data structure (300) comprises at least one data field (302) for an input of reduced dimensions determined by removing from the multidimensional input the dimension that corresponds or the dimensions that correspond to the at least one vector, wherein the data structure (300) comprises at least one data field (302) for the configured model (106), wherein the model (106) is configured with a layer of reduced dimensions that is configured to map the input of reduced dimensions depending on weights from the second matrix to an output of reduced dimensions, and wherein the model (106) is configured for determining the output of the model (106) depending on the output of reduced dimensions, and wherein the data structure (300) comprises at least one data field (302) for training data, wherein the model (106) is configured to determine the input of the layer depending on an input of the model (106), wherein the training data comprises pairs of an input of the model (106) and a ground truth for the output of the model (106), wherein the input of the model (106) comprises or represents information about a technical system (108), wherein the input represents or comprises the sensor signal, and wherein the output and the ground truth represents or comprises a classification of the sensor signal, wherein the model (106) is configured for outputting, depending on the input of the model (106), a classification classifying the sensor signal, wherein the sensor signal comprises a digital image, audio data, or video data, radar data, LiDAR data, ultrasonic sensor data, motion sensor data, or thermal image sensor data, wherein the technical system (108) is a robot, in particular a vehicle, wherein the input comprises an object representing a traffic participant or infrastructure, wherein the output is a classification of the object, wherein the classification of the object is to avoid the object or to drive over the object.

Fig. 1

Fig. 2

300 —

302

• • •

302

**Fig. 3**

Europäisches
Patentamt

European
Patent Office

Office européen
des brevets

# EUROPEAN SEARCH REPORT

**Application Number**

EP 24 20 2639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ashkboos Saleh ET AL: "SLICEGPT: COMPRESS LARGE LANGUAGE MODELS BY DELETING ROWS AND COLUMNS", , 9 February 2024 (2024-02-09), pages 1-22, XP093244997, Retrieved from the Internet: URL:https://arxiv.org/pdf/2401.15024 * abstract * * Section 2.1 * * Section 2.2 * * Section 3.1 * * Section 4.1 * * Algorithm 1 * ----- | 1-10 | INV. G06F16/906 G06N3/00 G06N20/00 |
| X | Bini Massimo ET AL: "ETHER: Efficient Finetuning of Large-Scale Models with Hyperplane Reflections", , 30 May 2024 (2024-05-30), pages 1-20, XP093244974, Retrieved from the Internet: URL:https://arxiv.org/pdf/2405.20271v1 * abstract * * Section 3.1 * * Section 3.2 * * Section 3.4 * * figures 1,2 * ----- -/-- | 1-10 | |
| | | | **TECHNICAL FIELDS SEARCHED (IPC)** G06F G06N |

The present search report has been drawn up for all claims

| Place of search | Date of completion of the search | Examiner |
|---|---|---|
| Berlin | 3 February 2025 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

Application Number

EP 24 20 2639

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Yuan Shen ET AL: "Bridging The Gap between Low-rank and Orthogonal Adaptation via Householder Reflection Adaptation", , 24 May 2024 (2024-05-24), pages 1-33, XP093245010, Retrieved from the Internet: URL:https://arxiv.org/pdf/2405.17484v1 * abstract * * Section 2.1 * * Section 3.1 * * figure 1 * ----- | 1-10 | |

TECHNICAL FIELDS
SEARCHED (IPC)

The present search report has been drawn up for all claims

| Place of search | Date of completion of the search | Examiner |
|---|---|---|
| Berlin | 3 February 2025 | Pose Rodríguez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
......................................................................................
& : member of the same patent family, corresponding
document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. B. NOACH** ; **Y. GOLDBERG**. Compressing pre-trained language models by matrix decomposition. *AACL*, 2020

- **S. ASHKBOOS** ; **M. L. CROCI** ; **M. G. DO NASCIMENTO** ; **T. HOEFLER** ; **J. HENSMAN**. *Slicegpt: Compress large language models by deleting rows and columns*, 2024